(19) Europäisches Patentamt
European Patent Office
Office européen des brevets

(11) Publication number: **0 421 652 A2**

# (12) EUROPEAN PATENT APPLICATION

(21) Application number: **90310465.1**

(22) Date of filing: **25.09.90**

(51) Int. Cl.5: **H04M 3/24**, H04M 11/06

(30) Priority: **03.10.89 US 416576**

(43) Date of publication of application:
**10.04.91 Bulletin 91/15**

(84) Designated Contracting States:
**DE FR GB IT SE**

(71) Applicant: **AMERICAN TELEPHONE AND TELEGRAPH COMPANY**
**550 Madison Avenue**
**New York, NY 10022(US)**

(72) Inventor: **Uyar, M. Umit**
**1187 Ocean Avenue, Apt. 3**
**Sea Bright, New Jersey 07760(US)**

(74) Representative: **Watts, Christopher Malcolm Kelway et al**
**AT&T (UK) LTD. AT&T Intellectual Property Division 5 Mornington Road**
**Woodford Green Essex IG8 OTU(GB)**

## (54) Coordination method for multi-user system conformance testing.

(57) Coordination of test sequences to be run simultaneously by individual testers for conformance testing of multi-user systems to their specification is achieved in accordance with the present method. In order to utilize the present invention, it is necessary to generate a test sequence, desirably, one of minimum cost, which covers all aspects of the specification for the multi-user system under test. For many standard test sequence generation techniques, it is preferable to represent the multi-user system as a finite state machine. The test sequence is then divided into several different test sequences corresponding to individual testers wherein each of the different test sequences can be run simultaneously by individual testers. Then, the separate test sequences are inspected to identify instances where coordination is required among the various multiple testers which are expected to run the tests simultaneously. After the coordination instances are identified, additional instructions coordination primitives are inserted into the original test sequence for each tester to permit effective coordination between all testers. Coordination signalling is performed on an out-of-band communication media between the testers.

FIG.1

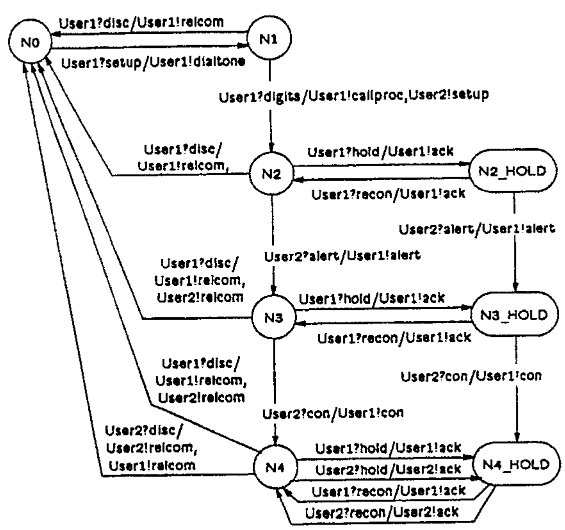


EP 0 421 652 A2

# COORDINATION METHOD FOR MULTI-USER SYSTEM CONFORMANCE TESTING

## Technical Field

This invention relates to testing conformance to a prescribed specification or standard for multi-user systems.

## Background of the Invention

Diverse systems such as digital communication switches, PBXs, implementations of high-layer communication protocols, and VLSI circuits can be classified as multi-user systems because each entity offers services to more than one user simultaneously. The term "user" is understood to be context-sensitive comprising terminals, computers, chips, circuit elements, or telephone equipment, for example. Testing such systems to ensure that each conforms to a standard specification continues to be a challenging task because of the complexity of the services each offers. Since multi-user systems and the services provided thereby involve differing numbers of users, conformance testing requires several test systems to be invoked for effective and thorough testing to be accomplished. For example, consider the voice conference service offered by a telecommunication switch where several users can simultaneously talk to each other once a conference call is set up. At the present time, testing such a service for its conformance to the specification requires several manual testers or craftspersons each testing a different leg of the conference call setup. Such a procedure is obviously complex, cumbersome, and generally ineffective for fully testing system conformance and operability in light of a prescribed standard or specification.

Recently, several methods have gained interest in replacing manual techniques with automated techniques for test sequence generation. See, for example, U.S. Patent 4,692,921 and U.S. Patent application Serial No. 362,724 (A. Dahbura Case 3-5-1). While these techniques are useful for single use systems, there are several difficulties in automatically generating test sequences for multi-user systems. Complexity of the systems and services prevent the use of such generated test sequences. Of course, the methods can be applied to generate test sequences for each individual tester in a multi-user system. However, there is no procedure for testing the multi-user services where it is necessary to decide which tester will run a particular test and when the tester will run that test. Even though this problem has been recognized by industry experts, it has been observed that, at this time, coordination procedures to allow multi-user system testers to run simultaneously in a synchronized fashion remain an unsolved problem. See, for example, R.J.Linn, IEEE J. on Selected Areas in Communications, Vol. 7, No. 7, pp. 1143-58 (September 1989).

Without the test coordination procedures, test laboratories are forced to employ inefficient and costly procedures in order to conduct multi-user systems test. For example, a single tester is placed in a multi-user environment whereas the remaining would-be testers are replaced by standard user equipment which is incapable of testing and verifying results. It is understood that a tester is typically a hardware, or software, or combined hardware and software system implemented by a test laboratory for only testing purposes. It is capable of generating unexpected and illegal behavior and timeouts that may be caused by a user in addition to the expected behavior. Furthermore, a tester is generally equipped to analyze, in detail, any response received from the multi-user system under test, thereby, making the tester capable of detecting even small errors. By contrast, standard user equipment is generally a device implemented by a manufacturer for actual use in a multi-user system. The standard user equipment cannot create unexpected and illegal user behavior; it cannot cause timeouts; and it cannot analyze the the response of the multi-user system in detail since it is built to generate standard default actions only. In one example, testing a digital telecommunication switch for conference service without test coordination procedures is presently handled by a single specialized tester and several commercially available telephones. Coverage of testing for this example is not be complete since the standard telephone equipment cannot generate certain unexpected or illegal behavior thus leaving those aspects of the multi-user system behavior untested. In such a minimal test environment, the effectiveness of the testing is severely limited.

## Summary of the Invention

Coordination of test sequences to be run simultaneously by individual testers for conformance testing of multi-user systems to their specification is achieved in accordance with the present method. In order to utilize the present invention, it is necessary to generate a test sequence, desirably, one of minimum cost, which covers all aspects of the specification for the multi-user system under test. For many standard test sequence generation techniques, it is preferable to represent the multi-user system as a finite state machine. The test sequence is then divided into several different test sequences corresponding to individual testers wherein each of the different test sequences can be run simultaneously by individual testers. Then, the separate test sequences are inspected to identify instances where coordination is required among the various multiple testers which are expected to run the tests simultaneously. After the coordination instances are identified, additional instructions coordination primitives are inserted into the original test sequence for each tester to permit effective coordination between all testers. Coordination signalling is performed on an out-of-band communication media between the testers, thereby, providing a very flexible testing environment. Also, there is no central mechanism for controlling all testers in this method which allows testers to reside in remote sites.

## Brief Description of the Drawing

A more complete understanding of the invention may be obtained by reading the following description of a specific illustrative embodiment of the invention in conjunction with the appended drawing in which:

FIG. 1 is a finite state machine representation of an exemplary multi-user system;

FIG. 2 is a flow chart diagram of the method steps in accordance with the principles of the invention; and

FIG. 3 through 11 show test sequence tables derived at various steps in accordance with the present inventive method.

## Detailed Description

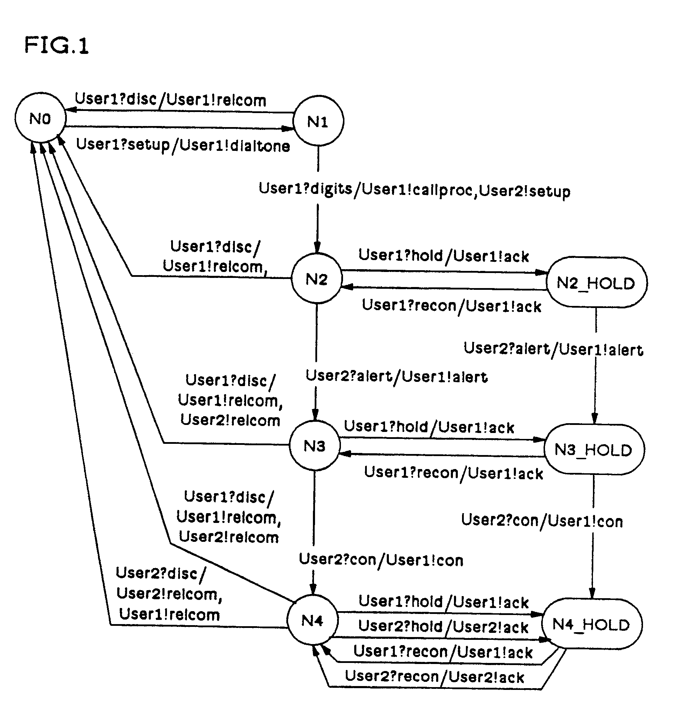

A specification for an entity such as a hardware device or a software application or a communications protocol can be described as an abstract model called a finite state machine. The finite state machine consisting of a finite number of states, a defined set of inputs or stimuli which can be applied to the finite state machine, and a defined set of observable outputs generated by the finite state machine. The finite state machine changes from one state to another when an input or stimulus is applied to the machine. A state is defined as a stable condition in which the entity or finite state machine rests until the next stimulus or input is applied. Each input also causes the finite state machine to generate an observable output. FIG. 1 shows a graph representation of a finite state machine for a multi-user system involved with ISDN basic rate interface supplementary service (call holding) which is to be provided by switching machines. The finite state machine shown in FIG. 1 is deterministic because a particular input symbol causes at most one transition from each state in the machine.

As shown in FIG. 1, the finite state machine is represented as and its behavior are described by a directed graph called a state diagram wherein a node or vertex of the graph (shown as a circle in FIG. 1) corresponds to a state of the finite state machine and wherein a directed edge between two nodes or a node and itself (shown as an arrow between two circles in FIG. 1) corresponds to a transition from one state to another. The directed graph representation of a finite state machine provides an easy way to visualize the operation of the finite state machine and, thereby, the corresponding entity. Each directed edge of the graph is labeled both by the particular input symbol which causes the state transition and by the observable output symbol generated thereby.

To model the fact that more than one testing entity or tester interacts with the multi-user system by sending signals to or receiving signals from the testing entities, edge labels are applied to the directed graph according to the following notation:

A ? $input_i$ / B ! $output_j$

where the multi-user system receives an input called $input_i$ from a testing entity called *Tester A* and sends an output called $output_j$ to a testing entity called *Tester B*. Testing entities A and B are generally different testers, but they may be the same testing entity. It is assumed that all testing entities communicating with a multi-user system are external to the multi-user system implementation. That is, inputs sent to a multi-user system by testing entities are controlled or generated externally with respect to the multi-user system and outputs sent by a multi-user system to the testing entity or testing entities are observable or verifiable externally with respect to the multi-user system. Such an assumption includes almost all practical implementations of multi-user systems in the ares of digital communications and VLSI circuit design.

As stated above, the actions of sending an output to a testing entity and receiving an input from a testing entity are denoted as *?* and *!*, respectively. In FIG 1, the edge from state N0 to state N1 which is labeled as User1?setup/User2!dialtone, corresponds to the following action: *When the multi-user system is in state N0, it receives an input called "setup" from User 1, sends an output called "dial tone" to User 1, and moves to state N1.* In this context, the term "User" is used synonymously and interchangeably with the term "Tester".

In a label on an edge of the directed graph of the finite state machine for the multi-user system, there can only be one input received from multiple testing entities. However, the multi-user system can generate outputs which are to be sent to more than one testing entity. In this case, an edge is shown with the following notation:

A ? $input_i$ / B ! $output_j$ , C ! $output_k$ • • •

where upon receipt of an input called $input_i$ from testing entity A, the multi-user system sends outputs called $output_j$ to testing entity B and $output_k$ to entity C. Each output is separated by commas. There cannot be two outputs to the same testing entity generated by a single input. For example, in FIG 1, the edge from state N1 to state N2 labeled as

User1 ! digits / User1 ! call_proc , User2 ! setup

is interpreted as follows: *the multi-user system receives the input called* **digits** *from User1 as state N1 and moves to state N2 while sending* **call_proc** *output to User1 and* **setup** *to User2.*

Testing a multi-user system implementation for conformance to its specification requires multiple testers to be run simultaneously in a coordinated fashion. In other words, all testing entities communicating with the multi-user system are required to send inputs to and expect outputs from the multi-user system at predetermined time instances. In order to realize a multiple tester environment, it is important to understand that: tests that are run simultaneously by the various testers should cover substantially every state transition of the finite state machine representing the multi-user system specification; the total number of tests to be run by the various testers should be minimal since the testing time for complex protocols and the like may otherwise require infeasibly long testing times; since a multi-user system specification is typically given as a combination of input or output interactions with various testing entities with which the multi-user system communicates, the tests defined for a multi-user system implementation should be defined for individual testers, each of which represents a testing entity that communicates with the multi-user system; and each tester should be synchronized with each other in order to test an multi-user system implementation correctly. Th latter consideration requires a mechanism called the test coordination procedure among the various testers which is described and implemented herein in accordance with the principles of the invention.

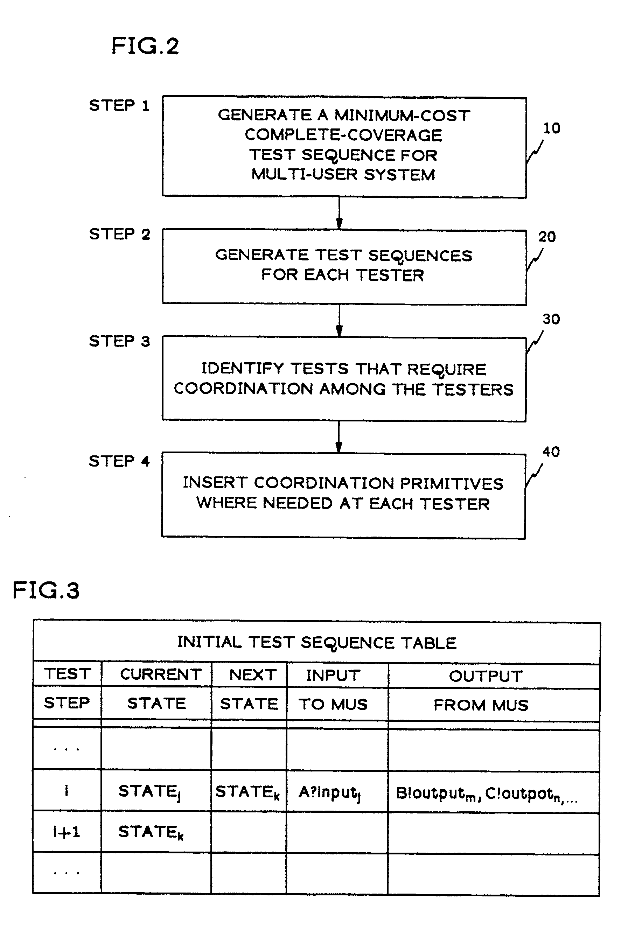

The method which realizes the above-mentioned considerations for generating multiple tester environment for an multi-user system is shown in FIG. 2. For the first and second considerations disclosed above, the method described hereinbelow may use the procedure disclosed in U. S. Patent 4,692,921 for generating test sequences for a specification represented by a finite state machine. The preferred procedure given above generates tests that require minimum run-time while completely covering every state transition defined for a finite state machine. For the third and fourth considerations disclosed above, a procedure is introduced to automatically divide the generates test sequence among the several testers and to detect the instances in each of the divided test sequences where coordination among the testers is needed.

FIG 2 depicts the steps of the method to generate coordinated test sequences for the conformance testing of a multi-user system in accordance with the principles of the present invention.

In the first step, step 10, a test sequence for a multi-user system is generated based on its finite state machine model. The test sequence comprises consecutive inputs and outputs to be sent to and received from the multi-user system implementation under test. The finite state machine model represents the behaviour of the multi-user system which is communicating with several testing entities under various circumstances including expected, unexpected and erroneous behavior of the testing entities. Therefore, it is important for the test sequence that all state transitions defined in the finite state machine model are covered. The method described herein assumes that such a model is available for a multi-user system. The test sequence generated in the first step is called the "initial test sequence" in order to distinguish it from the coordinated test sequences that will be generated in the latter steps of the inventive method.

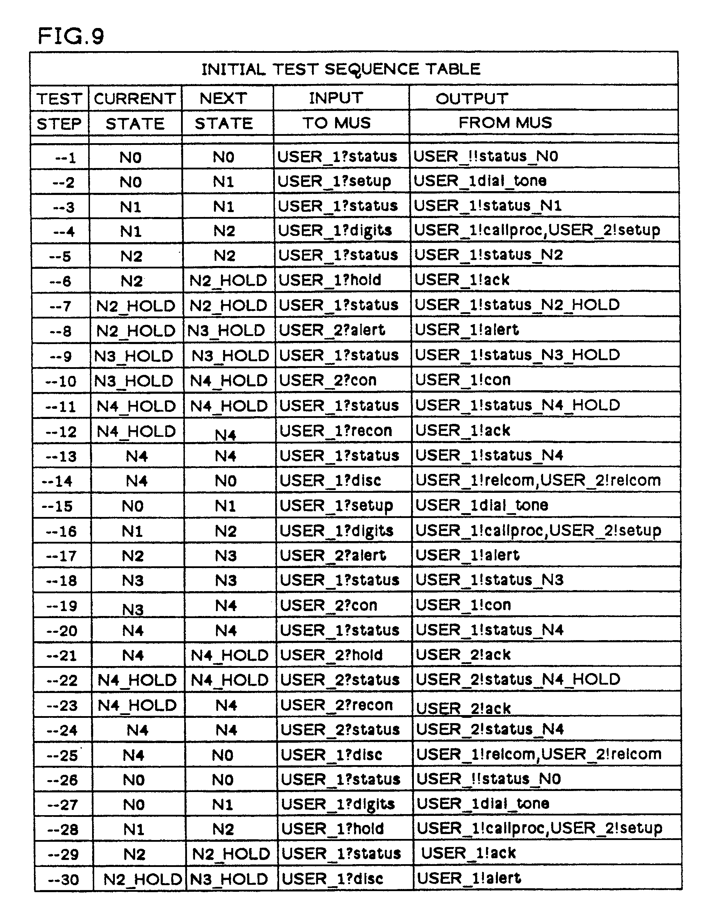

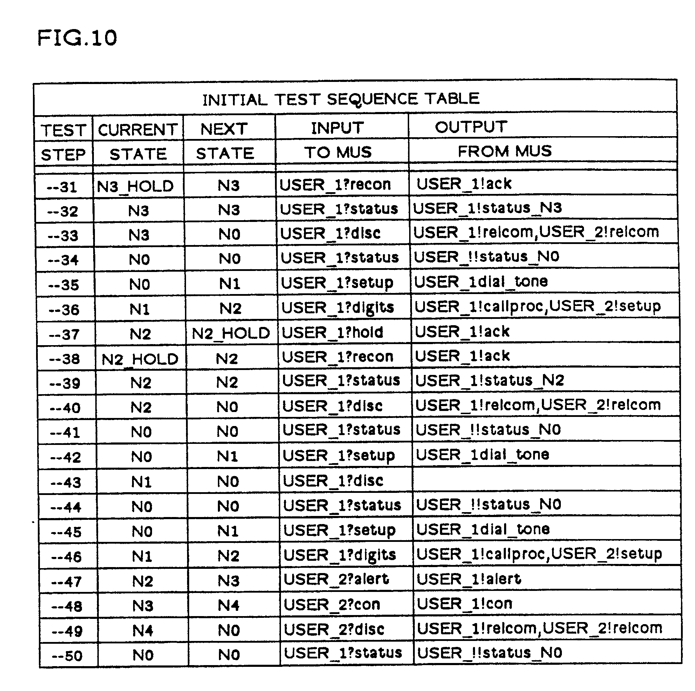

An exemplary minimal initial test sequence for the diagram shown in FIG. 1 is shown in FIG. 9 and continued in FIG. 10. The format of the initial test sequence in generalized form is shown in the table of FIG. 3. In FIG. 3, the field called TEST STEP gives the order in which the inputs are applied to the multi-user system under test (i.e., TEST STEP i is followed by TEST STEP i+1 and i+2 and so on). The fields called CURRENT STATE and NEXT STATE indicate the current and expected new state of the multi-user system implementation, respectively. The input to be sent to the multi-user system from the testing entity (including the name of the entity that generates the input) and the expected output or outputs to be sent to the testing entity or entities (including the name or names of the entities that are expecting to receive the outputs) are given in the fields called MSG TO MUS and MSG FROM MUS, respectively, where MUS stands for multi-user system. By referring to FIG. 3, it can be seen that, during TEST i, the multi-user system implementation under test is in state $STATE_j$. A testing entity called A sends an input called $input_l$ to the multi-user system and the multi-user system is expected to send outputs called $output_m$ and $output_n$ to the testing entities called B and C, respectively, (or more entities as defined in the multi-user system specification), The new state of the multi-user system becomes $STATE_k$. After TEST i is executed, the initial test sequence continues with the execution of TEST i+1 where the current state of the multi-user system is $STATE_k$.

During testing, all outputs generated by the multi-user system implementation under test should have been be by the multi-user system specification for every test of the sequence. Otherwise, the implementation may experience failure for that test

In the second step, step 20, of the method in FIG. 2, the initial test sequence generated in the first step is divided among various testers to which each particular test step corresponds. Testers simultaneously run to execute their individual tests that are determined for each of them at this step. In order for proper operation of the method and in addition to communicating with the multi-user system implementation, it is desirable for testers to communicate with each other by means of an external media which, depending on the testing environment, may be a telephone line, a software link (i.e., a virtual link) or a cable. Such an inter-tester communication arrangement is typically called out-of-band communication. The characteristics of the test environment determine the selection for the simplest and the most appropriate out-of-band communication media.

During testing, each entity (user) defined in the finite state machine model of a multi-user system is replaced with an individual tester so that the correctness of the interactions between the entities and the multi-user system implementation can be tested. Therefore, the number of testers needed to test a multi-user system implementation is equal to the number of entities (users) with which the multi-user system communicates. User entities that a multi-user system communicates with are specified in the specification of the multi-user system, and therefore, are included in the edge labels of its finite state machine model. This information is also included in the initial test sequence, since the initial test sequence generated at the previous step is based on the finite state machine model and, therefore, the specification of a multi-user system.

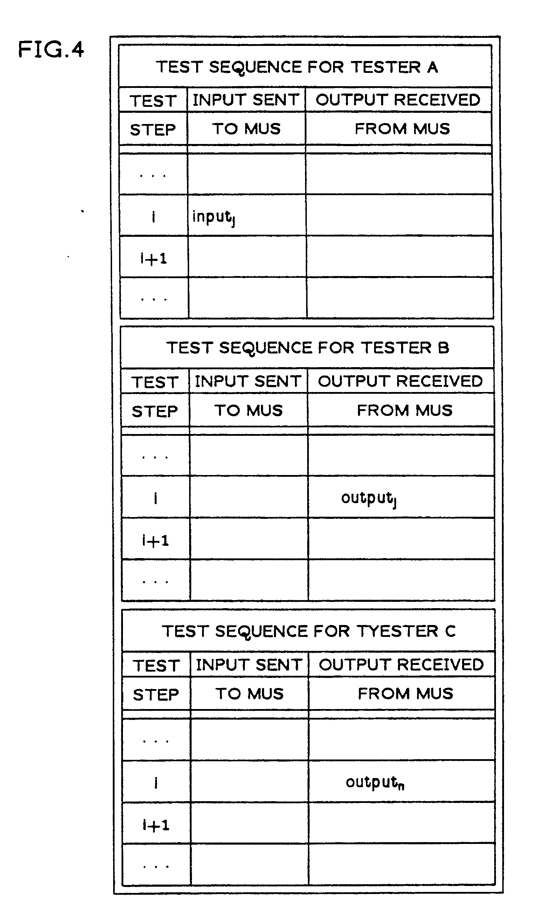

From the table in FIG. 3, it is determined that three entities and, therefore, that three testers, called TESTER A, B and C, are needed in order to run TEST STEP i of the initial test sequence. Between the multi-user system implementation and the three testers, a message exchange takes place during TEST i as shown in FIG. 4. FIG. 4 shows the assignment and division of particular test steps among the various test entities. During TEST STEP i, TESTER A sends $input_l$ to the multi-user system implementation under test (as shown in the second column of the test sequence table of TESTER A) and TESTER B and C expects outputs called $output_m$ and $output_n$, respectively, from the multi-user system implementation (as shown at the third column of each tester table). Since the testers need not know what state the implementation is in, this information is not included in the tester tables (note that, if the implementation moves to a wrong state, the output will be different than what is specified in the specification for the next test and the error will be caught eventually by the test sequence generator). At the end of the third step of the method, every test of the initial test sequence is divided into the exchange of inputs and outputs between the multi-user system implementation under test and the individual testers such that TEST STEP i of initial test sequence corresponds to TEST STEP i for every individual tester. During testing, every tester must execute TEST STEP i (for i=1,2,3..,x for an initial test sequence of length x) simultaneously.

In order to perform the tests correctly, TEST STEP i of each tester must be executed simultaneously among all testers. Given that each tester may reside in remote sites, a coordination mechanism synchronizes the testers. While the testers may not necessarily be physically remote, they may run in the same system however each may be residing in an independent software process and, therefore, be considered as remote.

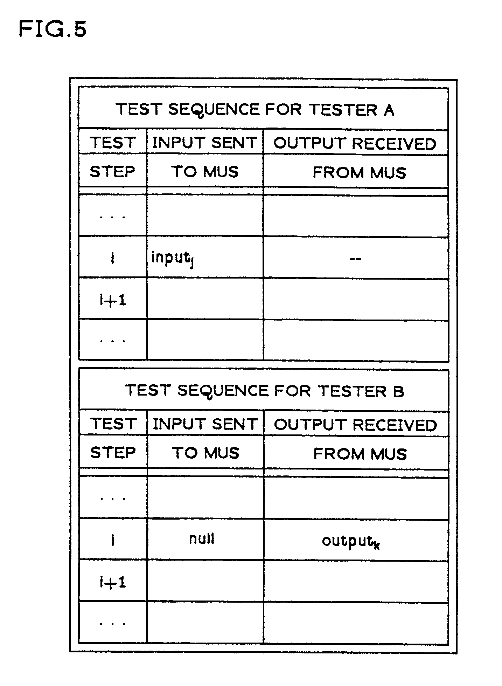

In the third step, step 30, of the method, the tests of each tester for which synchronization and coordination is needed are determined. Coordination between any two testers is needed if any of the conditions shown in FIG. 5 hold for TEST STEP i: In FIG. 5, the fields that are marked as "null" indicate that input or output exchange with the tester and the multi-user system implementation must not take place. Any input and output exchange that will not affect Condition 1 is marked as "--" to signify a "don't care" condition. The variable n used in TEST STEP field of the above tables is defined as $1 < n < x-1$ for an initial test sequence with x tests.

Condition 1 corresponds to the case where TESTER A sends an input called $input_j$ to a multi-user system implementation which causes TESTER B to receive an output called $output_k$. In this case, TESTER B needs to be informed to wait for $output_k$ from the multi-user system implementation. In this way any, output erroneously sent by a multi-user system implementation to TESTER B before $input_j$ is sent by TESTER A will be caught. Also, where an implementation is expected to generate $output_k$ within a certain time, the coordination mechanism will permit such testing to occur.

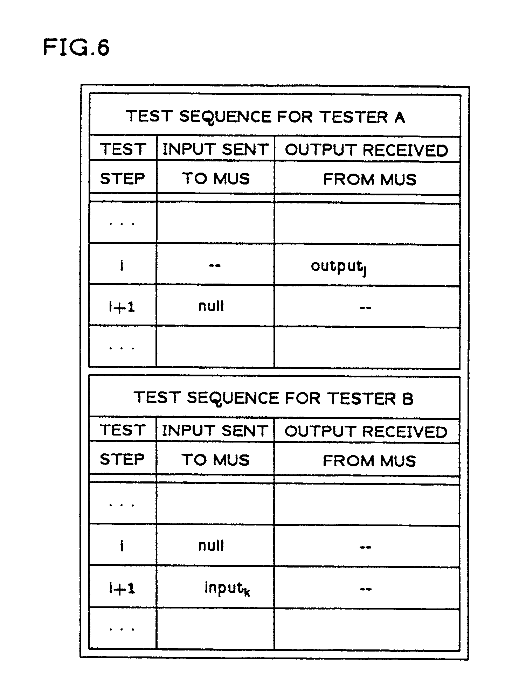

Condition 2 represents the case when different testers are to send inputs to a multi-user system implementation. In the tables given for Condition 2 and shown in FIG. 6, TESTER A receives $output_j$ after TESTER B needs to be flagged so that it can send $input_k$ to the multi-user system implementation. Note that $output_j$ may be generated as a response to an input sent to the multi-user system implementation by any tester except TESTER B. If this did not occur, TESTER B would not be able to determine the correct time at which to send $input_k$.

At the completion of the third step of the method, the tests that require coordination (i.e., each test that satisfies Condition 1 or 2) are identified in each tester.

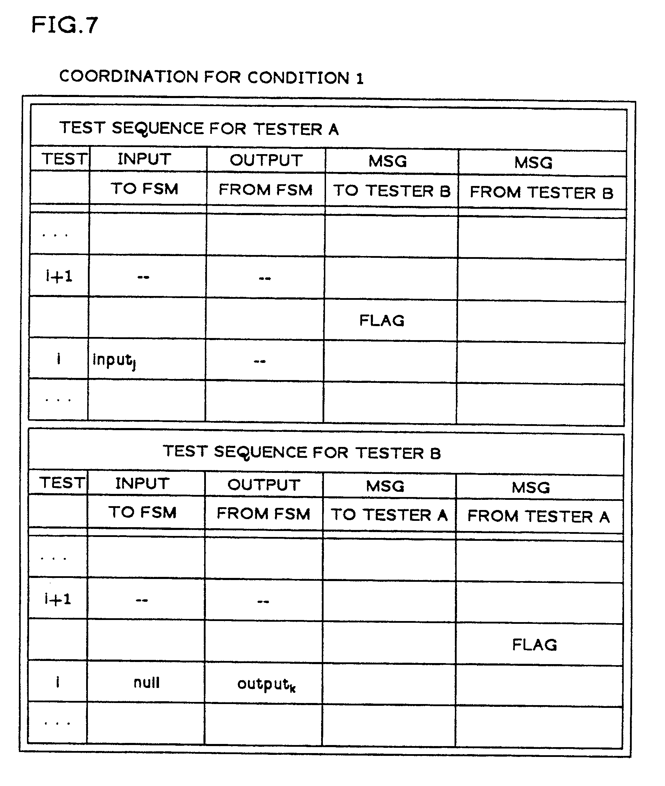

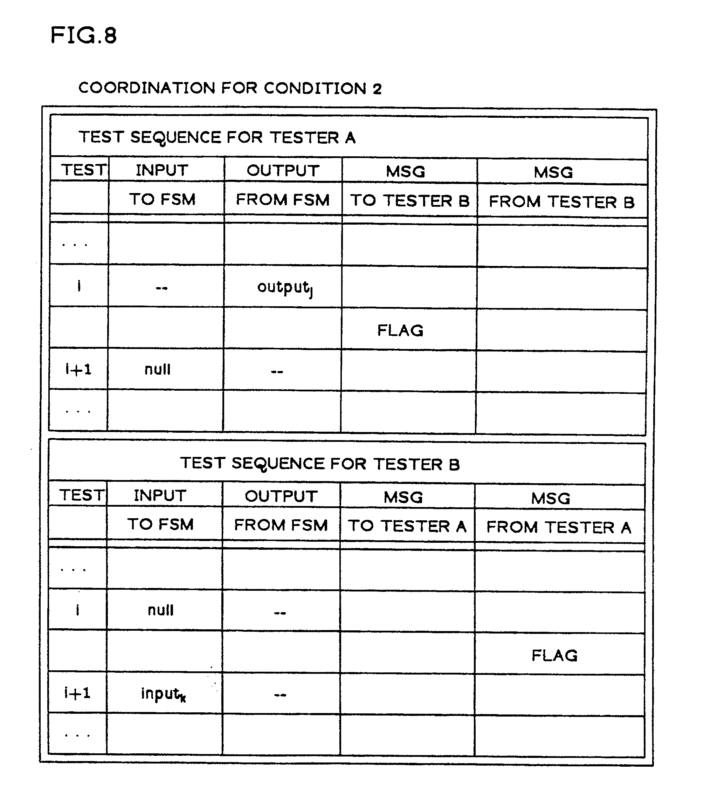

At the fourth step, step 40, of the method, coordination among the testers is accomplished by means of a pseudo-message (or signal) called FLAG defined among the testers. This pseudo-message can be exchanged among the testers over the inter-tester communication facility. FLAG is defined both as an input and output to be exchanged among the testers (e.g., A?FLAG or B!FLAG). Since it is defined as out-of-band communication and carried by a separate medium, the communications between testers does not affect the state of the inter-tester multi-user system implementation under test nor does it cause an input or output exchange to occur with the implementation. The tests that satisfy Conditions 1 or 2 as defined in the previous step are coordinated by inserting the FLAG pseudo-message into the testers as shown in FIG. 7 for a Condition 1 occurrence and in FIG. 8 for a Condition 2 occurrence.

In the above tables of FIG 7, TESTER A sends FLAG to TESTER B before executing TEST STEP i. Similarly, TESTER B waits for a FLAG from TESTER A before it starts waiting for $output_k$. Since coordination between testers is not a part of the test, there is no test number assigned to the steps corresponding to exchanging FLAG. Also, there are no timing constraints on waiting for FLAG (i.e., no timer is running) which allow different testers with different speeds of test execution to be synchronized.

In order to coordinate two testers that satisfy Condition 2, FLAG exchanges are inserted as shown in FIG. 8. After receiving $output_j$, TESTER A informs TESTER B to send $input_k$ to the multi-user system implementation. TESTER B waits for FLAG from TESTER A before sending $input_k$.

For the general case, each tester table includes the fields to represent the coordination messages exchanged with each tester. For example, the fields of MSG TO TESTER C, MSG FROM TESTER C will be added to the above coordinated tester tables for the case of three testers (A, B, and C). If coordination messages are not provided, the tests corresponding to Conditions 1 and 2 cannot be tested. As a result, complete coverage of state transitions for the multi-user system will not be provided.

Common practice in the industry, because of lack of a coordination mechanism, is to utilize a single tester system instead of a multiple tester system as described above. The remaining testers are replaced with standard user equipment (off-the-shelf equipment built to be used with the multi-user system). This practice even further limits the testing since many unexpected or illegal message tests, in addition to the tests satisfying Conditions 1 and 2, cannot be run. As briefly described above, standard user equipment cannot generate extraordinary messages, such as unexpected and illegal messages. On the other hand, a tester is a system that is specifically built for testing implementations and can easily generate non-default behavior. The coordination mechanism is also easily realized among testers, whereas it is almost impossible to have among standard user equipment.

## EXAMPLE

Consider the example given in FIG. 1 where a multi-user system with two users, called User1 and User2 is modeled as a finite state machine. This finite state machine represents a simplified version of the HOLD service offered by a digital communication switch. At each state of the finite state machine of FIG. 1, there is a loopback transition to the state itself bearing an edge label shown as an input/output pair and labeled as

User1?status/User1!status_Nx

where Nx can be any of the states of the finite state machine. For simplicity, this message is not shown in FIG. 1. After this input/output exchange takes place, the finite state machine remains in the same state or loops back on itself. For example, at state N1, this pair is labeled as

User1?status/User1!status_N1.

After exchanging this input/output with User1, the state of the finite state machine is still N1. For states N4 and N4_HOLD, this pair is also defined for User2 as follows

User2?status/User2!status_Nx

where Nx is either N4 or N4_HOLD.

In order to illustrate the inventive method described above, a coordinated test sequence for two testers (Note: there are two user entities) is generated for the finite state machine given in FIG. 1.

The method used to generate an initial test sequence for the finite state machine shown in FIG. 1. The initial test sequence, which has the format described earlier, is given in FIG. 9 and is continued into FIG. 10. The initial test sequence of FIGs. 9 and 10 requires minimum number of tests to completely cover the state transitions given in FIG.

1.

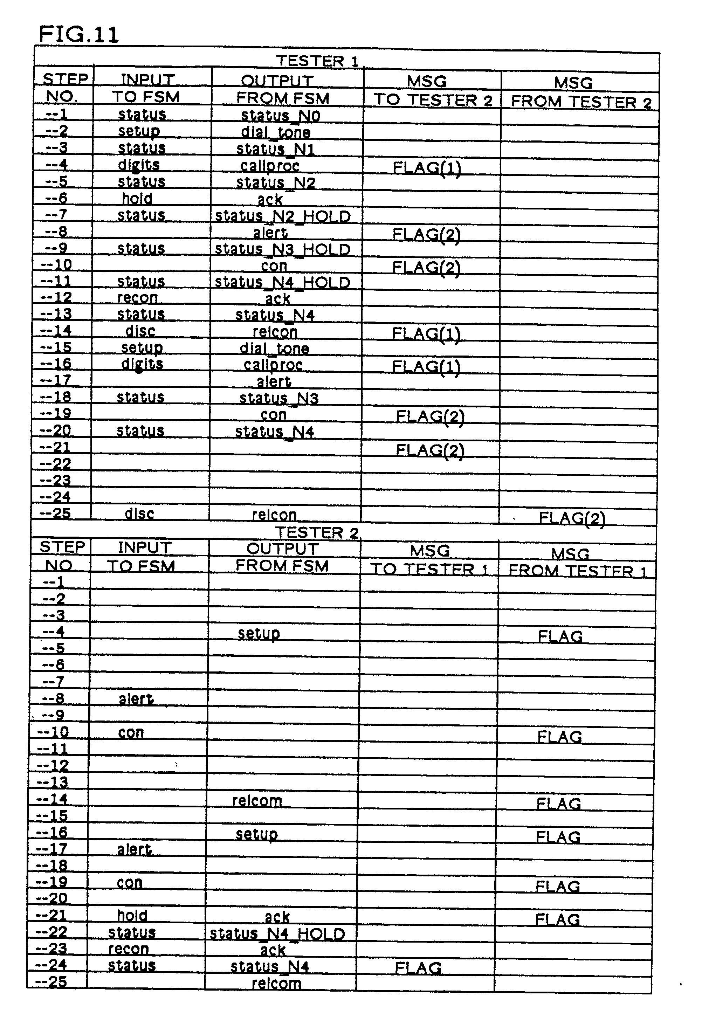

At the second step, the initial test sequence of FIG. 9 and 10 is divided among the two testers called TESTER 1 and 2 representing User1 and User2, respectively. The test sequence of each tester, derived from the initial test sequence of FIGs. 9 and 10 as described before, is given in in the three left-hand columns of both tables in FIG. 11.

The tests that need coordination are identified as each test of TESTER 1 and 2 is checked against Conditions 1 and 2. The following tests in TESTER 1 and 2 satisfy Condition 1: Tests 4, 14, 16, 28, 33, 36, 40, 46, 50. For example, as Test 4, Tester 2 needs to be informed by Tester 1 in order that Tester 2 will start waiting for "setup" message from the multi-user system implementation under test. The following tests in TESTER 1 and 2 satisfy Condition 2: Tests 8, 10, 18, 21, 25, 30, 47. For example, at Test 8, Tester 2 has to be flagged by Tester 1 to send "alert" input to the multi-user system implementation under test.

At the final step, for each of the tests that are identified as needing coordination, FLAG messages are inserted appropriately. The coordinated tests for each tester is shown in FIG. 11.

Certain benefits accrue from the use of the method described herein. For example, the time to run the tests is reduced to several hours for such complex services from several weeks since the tester action can be automated. Testing with a standard user equipment typically requires intervention of one or more operators. Using coordinated multiple testers increases the effectiveness of testing multi-user systems by completely covering all testable aspects of an implementation including under expected, unexpected and illegal conditions, and allows the automation of tests reducing the run time of tests by a several orders of magnitude. This method synchronizes the testers that are running at different speeds and that are independent of each other. This method is applicable to a wide class of implementations that bring services to more than one user, such as digital communication switches, PBXs, communication protocols for layers above network layer, software systems and VLSI systems. The method described above provides a complete coverage in testing multi-user system implementations that are modeled as finite state machines. Without this method, transitions that are corresponding to Conditions 1 and 2 cannot be tested. This method allows the automation of tests by using testers and, therefore, reduces the time to test multi-user system implementations by several orders of magnitude (for example, for complex communication protocols specified for multi-user systems, from weeks to hours). This method allows testing several aspects of an implementation simultaneously by providing coordination which makes possible the use of several testers simultaneously. Therefore, this method provides a test count reduction factor of up to n times for a multiple tester system with n testers. In this method, the total number of tests for the complete test sequence (i.e., the sum of the number of tests run by each tester) is minimum since the initial test sequence is obtained by a minimum cost method. This method provides a better observability (i.e., error detection capability) than any single tester method used to test a multi-user system implementation, since all of the testers are simultaneously observing the behaviour of an implementation.

## Claims

**1.** A method for testing conformance of a testable multi-user system to a prescribed specification, said multi-user system corresponding to a finite state machine characterized by a state diagram, said method comprising the steps of:
generating a test sequence for said multi-user system;
dividing said test sequence among users in order that a subset of said test sequence corresponding to each user of the system exists;
identifying instances among all subsets of the test sequences wherein coordination between the users is required in order for the subsets of the test sequence to be run simultaneously by the users; and
inserting coordination primitives into those subsets of the test sequence where a need for coordination was identified in the previous step.

**2.** The method or operation claim 1 wherein said finite state machine is characterized by a state diagram having states and original edges interconnecting the states, said step of generating the test sequence comprising the steps of:
evaluating unique input/output sequences for each state of said finite state machine so that the unique input/output sequence selected for each state exhibits a minimum cost among all unique input/output sequences evaluated for that state;
expanding said state diagram as a test graph including said states, said original edges, and a plurality of test edges interconnecting the states, said plurality of test edges for testing original edges of the state diagram;
evaluating said test graph for symmetry and, if not symmetric, duplicating selected test edges of said plurality to make said test graph symmetric with a minimum cost; and
generating a tour of the symmetric test graph wherein each test edge is traversed at least once, so that said tour includes said test sequence for said finite state machine at a minimum cost.

FIG.1

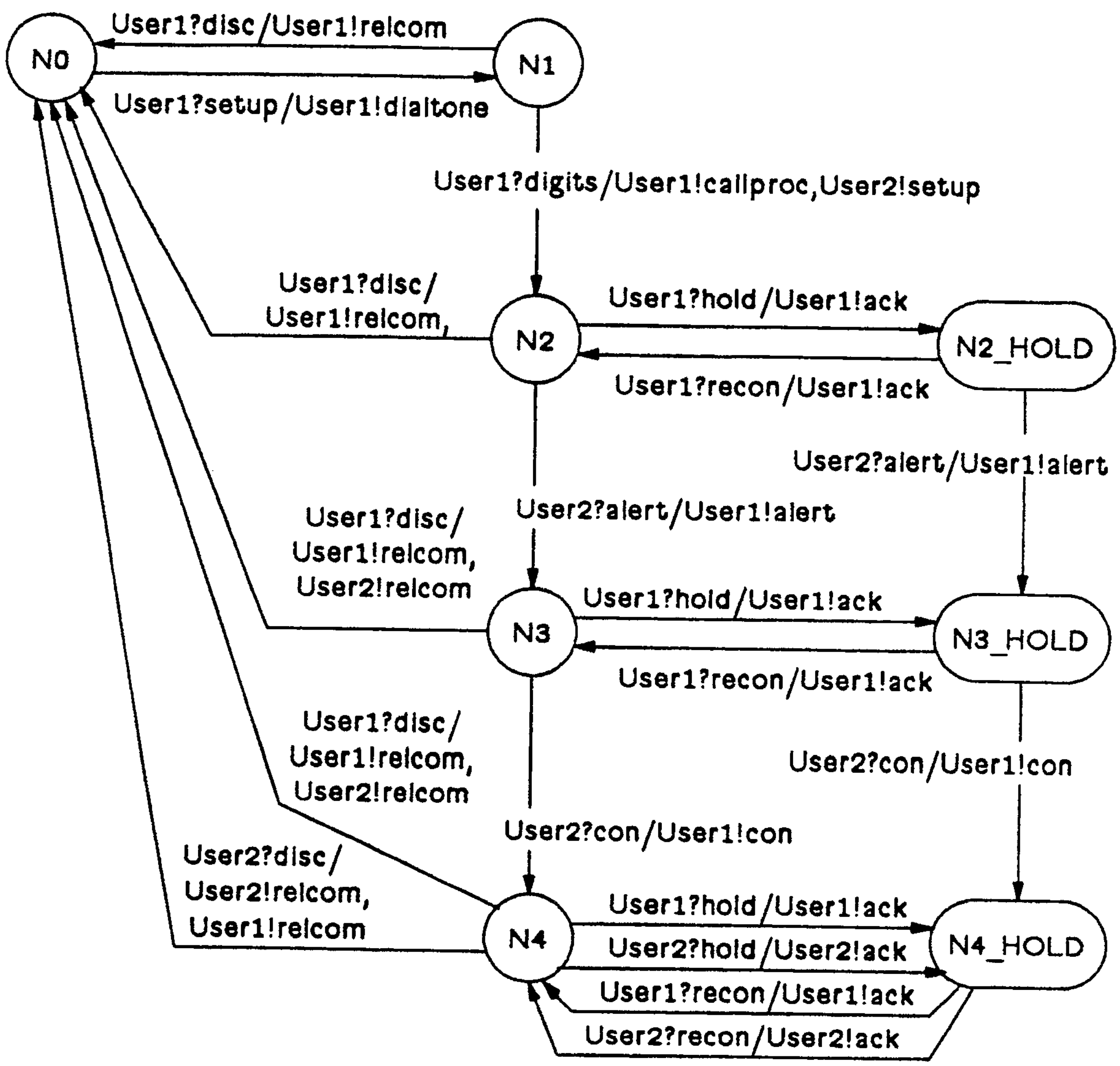
N0
N1
N2
N3
N4
N2_HOLD
N3_HOLD
N4_HOLD
User1?disc/User1!relcom
User1?setup/User1!dialtone
User1?digits/User1!callproc,User2!setup
User1?disc/
User1!relcom,
User1?hold/User1!ack
User1?recon/User1!ack
User2?alert/User1!alert
User2?alert/User1!alert
User1?disc/
User1!relcom,
User2!relcom
User1?hold/User1!ack
User1?recon/User1!ack
User2?con/User1!con
User1?disc/
User1!relcom,
User2!relcom
User2?con/User1!con
User2?disc/
User2!relcom,
User1!relcom
User1?hold/User1!ack
User2?hold/User2!ack
User1?recon/User1!ack
User2?recon/User2!ack

FIG.2

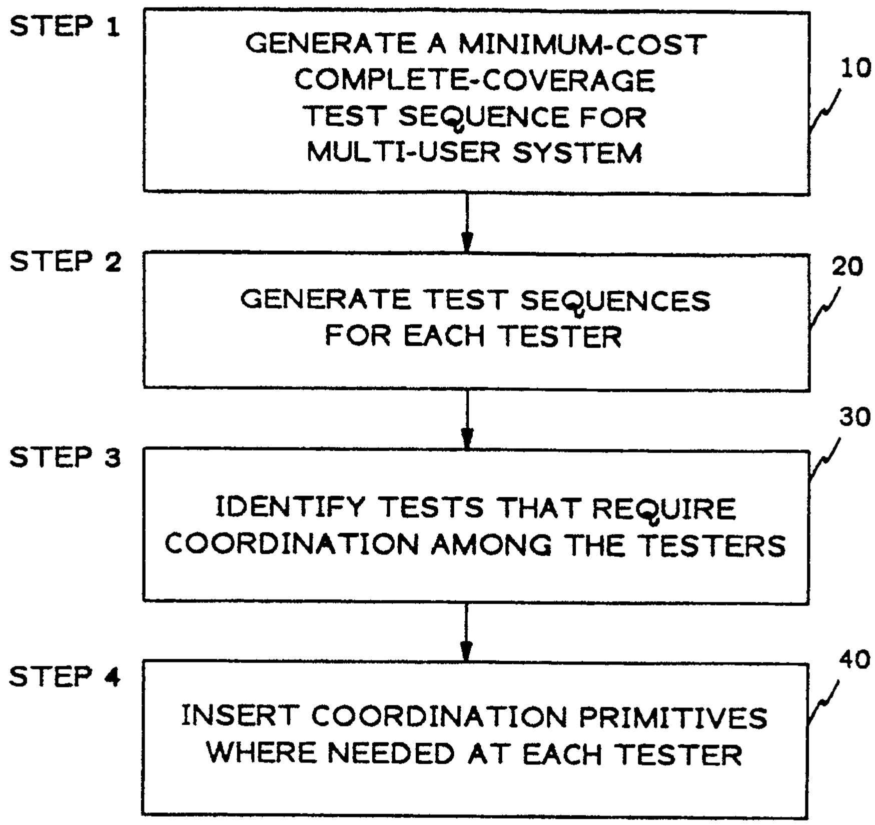


FIG.3

| INITIAL TEST SEQUENCE TABLE | | | | |
|---|---|---|---|---|
| TEST STEP | CURRENT STATE | NEXT STATE | INPUT TO MUS | OUTPUT FROM MUS |
| . . . | | | | |
| i | $STATE_j$ | $STATE_k$ | $A?input_j$ | $B!output_m$, $C!outpot_n$,... |
| i+1 | $STATE_k$ | | | |
| . . . | | | | |

FIG.4

| TEST SEQUENCE FOR TESTER A | | |
|---|---|---|
| TEST STEP | INPUT SENT TO MUS | OUTPUT RECEIVED FROM MUS |
| . . . | | |
| i | $input_j$ | |
| i+1 | | |
| . . . | | |

| TEST SEQUENCE FOR TESTER B | | |
|---|---|---|
| TEST STEP | INPUT SENT TO MUS | OUTPUT RECEIVED FROM MUS |
| . . . | | |
| i | | $output_j$ |
| i+1 | | |
| . . . | | |

| TEST SEQUENCE FOR TYESTER C | | |
|---|---|---|
| TEST STEP | INPUT SENT TO MUS | OUTPUT RECEIVED FROM MUS |
| . . . | | |
| i | | $output_n$ |
| i+1 | | |
| . . . | | |

FIG.5

| TEST SEQUENCE FOR TESTER A | | |
|---|---|---|
| TEST STEP | INPUT SENT TO MUS | OUTPUT RECEIVED FROM MUS |
| . . . | | |
| i | $input_j$ | -- |
| i+1 | | |
| . . . | | |

| TEST SEQUENCE FOR TESTER B | | |
|---|---|---|
| TEST STEP | INPUT SENT TO MUS | OUTPUT RECEIVED FROM MUS |
| . . . | | |
| i | null | $output_k$ |
| i+1 | | |
| . . . | | |

FIG.6

| TEST SEQUENCE FOR TESTER A | | |
|---|---|---|
| TEST STEP | INPUT SENT TO MUS | OUTPUT RECEIVED FROM MUS |
| . . . | | |
| i | -- | $output_j$ |
| i+1 | null | -- |
| . . . | | |

| TEST SEQUENCE FOR TESTER B | | |
|---|---|---|
| TEST STEP | INPUT SENT TO MUS | OUTPUT RECEIVED FROM MUS |
| . . . | | |
| i | null | -- |
| i+1 | $input_k$ | -- |
| . . . | | |

FIG.7

COORDINATION FOR CONDITION 1

TEST SEQUENCE FOR TESTER A

| TEST | INPUT TO FSM | OUTPUT FROM FSM | MSG TO TESTER B | MSG FROM TESTER B |
|---|---|---|---|---|
| . . . | | | | |
| i+1 | -- | -- | | |
| | | | FLAG | |
| i | $input_j$ | -- | | |
| . . . | | | | |

TEST SEQUENCE FOR TESTER B

| TEST | INPUT TO FSM | OUTPUT FROM FSM | MSG TO TESTER A | MSG FROM TESTER A |
|---|---|---|---|---|
| . . . | | | | |
| i+1 | -- | -- | | |
| | | | | FLAG |
| i | null | $output_k$ | | |
| . . . | | | | |

FIG.8

COORDINATION FOR CONDITION 2

| TEST SEQUENCE FOR TESTER A | | | | |
|---|---|---|---|---|
| TEST | INPUT TO FSM | OUTPUT FROM FSM | MSG TO TESTER B | MSG FROM TESTER B |
| . . . | | | | |
| i | -- | $output_j$ | | |
| | | | FLAG | |
| i+1 | null | -- | | |
| . . . | | | | |

| TEST SEQUENCE FOR TESTER B | | | | |
|---|---|---|---|---|
| TEST | INPUT TO FSM | OUTPUT FROM FSM | MSG TO TESTER A | MSG FROM TESTER A |
| . . . | | | | |
| i | null | -- | | |
| | | | | FLAG |
| i+1 | $input_k$ | -- | | |
| . . . | | | | |

FIG.9

| INITIAL TEST SEQUENCE TABLE | | | | |
|---|---|---|---|---|
| TEST STEP | CURRENT STATE | NEXT STATE | INPUT TO MUS | OUTPUT FROM MUS |
| --1 | N0 | N0 | USER_1?status | USER_!!status_N0 |
| --2 | N0 | N1 | USER_1?setup | USER_1dial_tone |
| --3 | N1 | N1 | USER_1?status | USER_1!status_N1 |
| --4 | N1 | N2 | USER_1?digits | USER_1!callproc,USER_2!setup |
| --5 | N2 | N2 | USER_1?status | USER_1!status_N2 |
| --6 | N2 | N2_HOLD | USER_1?hold | USER_1!ack |
| --7 | N2_HOLD | N2_HOLD | USER_1?status | USER_1!status_N2_HOLD |
| --8 | N2_HOLD | N3_HOLD | USER_2?alert | USER_1!alert |
| --9 | N3_HOLD | N3_HOLD | USER_1?status | USER_1!status_N3_HOLD |
| --10 | N3_HOLD | N4_HOLD | USER_2?con | USER_1!con |
| --11 | N4_HOLD | N4_HOLD | USER_1?status | USER_1!status_N4_HOLD |
| --12 | N4_HOLD | N4 | USER_1?recon | USER_1!ack |
| --13 | N4 | N4 | USER_1?status | USER_1!status_N4 |
| --14 | N4 | N0 | USER_1?disc | USER_1!relcom,USER_2!relcom |
| --15 | N0 | N1 | USER_1?setup | USER_1dial_tone |
| --16 | N1 | N2 | USER_1?digits | USER_1!callproc,USER_2!setup |
| --17 | N2 | N3 | USER_2?alert | USER_1!alert |
| --18 | N3 | N3 | USER_1?status | USER_1!status_N3 |
| --19 | N3 | N4 | USER_2?con | USER_1!con |
| --20 | N4 | N4 | USER_1?status | USER_1!status_N4 |
| --21 | N4 | N4_HOLD | USER_2?hold | USER_2!ack |
| --22 | N4_HOLD | N4_HOLD | USER_2?status | USER_2!status_N4_HOLD |
| --23 | N4_HOLD | N4 | USER_2?recon | USER_2!ack |
| --24 | N4 | N4 | USER_2?status | USER_2!status_N4 |
| --25 | N4 | N0 | USER_1?disc | USER_1!relcom,USER_2!relcom |
| --26 | N0 | N0 | USER_1?status | USER_!!status_N0 |
| --27 | N0 | N1 | USER_1?digits | USER_1dial_tone |
| --28 | N1 | N2 | USER_1?hold | USER_1!callproc,USER_2!setup |
| --29 | N2 | N2_HOLD | USER_1?status | USER_1!ack |
| --30 | N2_HOLD | N3_HOLD | USER_1?disc | USER_1!alert |

FIG.10

| INITIAL TEST SEQUENCE TABLE | | | | |
|---|---|---|---|---|
| TEST STEP | CURRENT STATE | NEXT STATE | INPUT TO MUS | OUTPUT FROM MUS |
| --31 | N3_HOLD | N3 | USER_1?recon | USER_1!ack |
| --32 | N3 | N3 | USER_1?status | USER_1!status_N3 |
| --33 | N3 | N0 | USER_1?disc | USER_1!relcom,USER_2!relcom |
| --34 | N0 | N0 | USER_1?status | USER_!!status_N0 |
| --35 | N0 | N1 | USER_1?setup | USER_1dial_tone |
| --36 | N1 | N2 | USER_1?digits | USER_1!callproc,USER_2!setup |
| --37 | N2 | N2_HOLD | USER_1?hold | USER_1!ack |
| --38 | N2_HOLD | N2 | USER_1?recon | USER_1!ack |
| --39 | N2 | N2 | USER_1?status | USER_1!status_N2 |
| --40 | N2 | N0 | USER_1?disc | USER_1!relcom,USER_2!relcom |
| --41 | N0 | N0 | USER_1?status | USER_!!status_N0 |
| --42 | N0 | N1 | USER_1?setup | USER_1dial_tone |
| --43 | N1 | N0 | USER_1?disc | |
| --44 | N0 | N0 | USER_1?status | USER_!!status_N0 |
| --45 | N0 | N1 | USER_1?setup | USER_1dial_tone |
| --46 | N1 | N2 | USER_1?digits | USER_1!callproc,USER_2!setup |
| --47 | N2 | N3 | USER_2?alert | USER_1!alert |
| --48 | N3 | N4 | USER_2?con | USER_1!con |
| --49 | N4 | N0 | USER_2?disc | USER_1!relcom,USER_2!relcom |
| --50 | N0 | N0 | USER_1?status | USER_!!status_N0 |

FIG.11

| TESTER 1 | | | | |
|---|---|---|---|---|
| STEP NO. | INPUT TO FSM | OUTPUT FROM FSM | MSG TO TESTER 2 | MSG FROM TESTER 2 |
| --1 | status | status_N0 | | |
| --2 | setup | dial_tone | | |
| --3 | status | status_N1 | | |
| --4 | digits | callproc | FLAG(1) | |
| --5 | status | status_N2 | | |
| --6 | hold | ack | | |
| --7 | status | status_N2_HOLD | | |
| --8 | | alert | FLAG(2) | |
| --9 | status | status_N3_HOLD | | |
| --10 | | con | FLAG(2) | |
| --11 | status | status_N4_HOLD | | |
| --12 | recon | ack | | |
| --13 | status | status_N4 | | |
| --14 | disc | relcon | FLAG(1) | |
| --15 | setup | dial_tone | | |
| --16 | digits | callproc | FLAG(1) | |
| --17 | | alert | | |
| --18 | status | status_N3 | | |
| --19 | | con | FLAG(2) | |
| --20 | status | status_N4 | | |
| --21 | | | FLAG(2) | |
| --22 | | | | |
| --23 | | | | |
| --24 | | | | |
| --25 | disc | relcon | | FLAG(2) |

| TESTER 2 | | | | |
|---|---|---|---|---|
| STEP NO. | INPUT TO FSM | OUTPUT FROM FSM | MSG TO TESTER 1 | MSG FROM TESTER 1 |
| --1 | | | | |
| --2 | | | | |
| --3 | | | | |
| --4 | | setup | | FLAG |
| --5 | | | | |
| --6 | | | | |
| --7 | | | | |
| --8 | alert | | | |
| --9 | | | | |
| --10 | con | | | FLAG |
| --11 | | | | |
| --12 | | | | |
| --13 | | | | |
| --14 | | relcom | | FLAG |
| --15 | | | | |
| --16 | | setup | | FLAG |
| --17 | alert | | | |
| --18 | | | | |
| --19 | con | | | FLAG |
| --20 | | | | |
| --21 | hold | ack | | FLAG |
| --22 | status | status_N4_HOLD | | |
| --23 | recon | ack | | |
| --24 | status | status_N4 | FLAG | |
| --25 | | relcom | | |